## Europäisches Patentamt
## European Patent Office
## Office européen des brevets

(11) Veröffentlichungsnummer: **0 334 379**
**A2**

# (12) EUROPÄISCHE PATENTANMELDUNG

(21) Anmeldenummer: **89105295.3**

(22) Anmeldetag: **23.03.89**

(51) Int. Cl.⁴: **B23B 31/40**

(30) Priorität: **24.03.88 DE 8804013 U**

(43) Veröffentlichungstag der Anmeldung:
**27.09.89 Patentblatt 89/39**

(84) Benannte Vertragsstaaten:
**AT BE CH DE ES FR GB GR IT LI LU NL SE**

(71) Anmelder: **L. & C. Steinmüller GmbH**
**Postfach 10 08 55/10 08 65 Fabrikstrasse 1**
**D-5270 Gummersbach 1(DE)**

(72) Erfinder: **Pollak, Gerd**
**Furtwänglerstrasse 10**
**D-5270 Gummersbach 1(DE)**
Erfinder: **Rottländer, Ulrich**
**Kreuzgarten 3**
**D-5063 Overath-Vilkerath(DE)**

(74) Vertreter: **Carstens, Wilhelm, Dipl.-Phys.**
**L. & C. Steinmüller GmbH Patentabteilung**
**Postfach 10 08 55/10 08 65**
**D-5270 Gummersbach 1(DE)**

(54) Innenspannende transportable Bearbeitungsvorrichtung.

㊼ Bei einer innenspannenden transportablen Bearbeitungsvorrichtung mit einer in ein Rohr (7) oder dergleichen einschiebbaren Innenspanneinrichtung (1) einschließlich von durch Verschieben einer axialen Betätigungsstange (8) radial nach außen an die Innenwandung des Rohres anlegbaren Spannelementen (6) und einer axial zur Inneneinrichtung (1) versetzt angeordneten und mit dieser verbundenen und außerhalb des Rohres (7) angeordneten Bearbeitungseinrichtung (9) mit einem ringartigen und relativ zur Innenspanneinrichtung drehbaren und in einem drehfest gehaltenen Gehäuse (26) angeordneten Bearbeitungsgerätträger (22, 23), wobei das Bearbeitungsgerät (34) radial verstellbar an dem Träger (23) gelagert und in axialer Richtung verstellbar ist, ist erfindungsgemäß vorgesehen, daß mit der Innenspanneinrichtung (1) ein sich durch den ringartigen Bearbeitungsgerätträger (22, 23) hindurch erstreckendes erstes rohrartiges Lager (10) verbunden ist, auf dessen der Innenspanneinrichtung (1) zugewandten Ende (10a) über eine zumindest teilkugelartig ausgebildete Lagerfläche (13) ein zum ersten rohrartigen Lagerelement (10) konzentrisches zweites rohrartiges Lagerelement (14) schwenkbar gelagert ist und an dessen anderen Ende (10b) das zweite Lagerelement (14) mittels mehrerer sich radial erstreckender Einstellschrauben (15) auf dem ersten rohrartigen Lagerelement (10) abgestützt ist, das auf dem zweiten Lagerelement (14) ein relativ zu diesem axial verschiebbarer rohrartiger Exzenterringträger (17) gelagert ist und daß auf dem Exzenterringträger (17) ein innerer (19) und ein äußerer Exzenterring (20) gelagert sind, die gegeneinander und gemeinsam relativ zum Exzenterringträger (17) verdrehbar und festklemmbar sind und daß der Bearbeitungsgerätträger (22) auf dem äußeren Exzenterring (20) drehbar gelagert ist.

Fig. 1.

## Innenspannende transportable Bearbeitungsvorrichtung

Die Erfindung betrifft eine innenspannende transportable Bearbeitungsvorrichtung mit einer in ein Rohr oder dergleichen einschiebbaren Innenspanneinrichtung einschließlich von durch Verschieben einer axialen Betätigungsstange radial nach außen an die Innenwandung des Rohres anlegbaren Spannelementen und einer axial zur Inneneinrichtung versetzt angeordneten und mit dieser verbundenen und außerhalb des Rohrs angeordneten Bearbeitungseinrichtung mit einem ringartigen und relativ zur Innenspanneinrichtung drehbaren und in einem drehfest gehaltenen Gehäuse angeordneten Bearbeitungsgerätträger, wobei das Bearbeitungsgerät radial verstellbar an dem Träger gelagert und in axialer Richtung verstellbar ist.

Eine solche Bearbeitungsmaschine ist aus dem Prospekt "Sondermaschinen - Rohrbearbeitung - vor Ort mit transportablen Maschinen" P 8308-09-07 1.L (1983) bekannt.

Weiterhin ist eine transportable Vorrichtung zur Bearbeitung des Randes eines gebördelten oder gewölbten Behälterbodens bekannt, bei dem an dem Gestellkopf eines Gestells eine Zentriervorrichtung bestehend aus zwei Exzenterringen bzw. Scheiben angeordnet ist, die gegeneinander und gemeinsam drehbar auf dem Gestellkopf festklammerbar angeordnet sind (DE-OS 35 09 151).

In dem außenliegenden Exzenterring ist ein innenspannendes Abkreisaggregat eingesetzt, an dessen Dreharm ein Bearbeitungsgerät angeordnet ist. Bei Einsatz der Bearbeitungsvorrichtung der anfangs genannten Art wird die Bearbeitungsvorrichtung mit der Innenspanneinrichtung in das Rohr eingeführt und die Spannelemente mit Hilfe der Betätigungsstange gegen die Innenwandung des Rohres gepreßt.

Es ist dabei nicht gewährleistet, daß die Achse der Innenspanneinrichtung mit der Achse des Rohres zusammenfällt, so daß die Achse der Innenspanneinrichtung und damit die Achse der Bearbeitungsvorrichtung einen Winkel mit der Rohrachse einschließen und/oder gegenüber der Rohrachse eine Exzentrizität aufweisen kann.

Es ist daher die Aufgabe der vorliegenden Erfindung, eine Bearbeitungsvorrichtung der genannten Art zu schaffen, bei der die Umlaufachse des Bearbeitungsgerätes mit der Achse des zu bearbeitenden Rohres gefluchtet werden kann. Es ist dabei möglich, daß die Innenspanneinrichtung zwar in ein Rohr eingeführt ist, die Achse des Bearbeitungsgerätes aber auf die Achse eines am Ende des Rohres angeordneten Flansches ausgerichtet werden soll. In diesem Falle soll das Bearbeitungsgerät nicht auf die Achse des Rohres, sondern auf die Achse des Flansches ausgerichtet werden.

Diese Aufgabe wird dadurch gelöst, daß mit der Innenspanneinrichtung ein sich durch den ringartigen Bearbeitungsgerätträger hindurch erstreckendes erstes rohrartiges Lager verbunden ist, auf dessen der Innenspanneinrichtung zugewandten Ende über eine zumindest teilkugelartig ausgebildete Lagerfläche ein zum ersten rohrartigen Lagerelement konzentrisches zweites rohrartiges Lagerelement schwenkbar gelagert ist und an dessen anderem Ende das zweite Lagerelement mittels mehrerer sich radial erstreckender Einstellschrauben auf dem ersten rohrartigen Lagerelement abgestützt ist, daß auf dem zweiten Lagerelement ein relativ zu diesem axial verschiebbarer rohrartiger Exzenterringträger gelagert ist und
daß auf dem Exzenterringträger ein innerer und ein äußerer Exzenterring gelagert sind, die gegeneinander und gemeinsam relativ zum Exzenterringträger verdrehbar und festklemmbar sind, und
daß der Bearbeitungsgerätträger auf dem äußeren Exzenterring drehbar gelagert ist.

Nach Einführen der Innenspanneinrichtung wird mittels der Betätigungsstange die Innenspanneinrichtung in dem Rohr festgelegt. Danach wird unter Beobachtung des umlaufenden Bearbeitungsgerätes mittels der Verstellschrauben die Achse des zweiten Lagerelements und damit die Achse des Exzenterringträgers in gewünschter Weise relativ zur Achse des ersten rohrartigen Lagerelements verschwenkt, bis die gewünschte relative Winkelstellung erreicht ist. In dieser Stellung wird das erste Lagerelement am zweiten Lagerelement durch die Verstellschrauben gehalten.

Danach werden die beiden Exzenterringe so zueinander und/oder relativ zum Bearbeitungsgerätträger verstellt, daß dieser bei Drehung keine Exzentrizität mehr zur Rohrachse bzw. Flanschachse aufweist. Danach wird der innenliegende Exzenter auf dem Exzenterringträger und der außenliegende Exzenter auf dem innenliegenden Exzenter festgeklemmt.

Vorzugsweise ist die Betätigungsstange an ihrem innenliegenden Ende drehbar in der Innenspanneinrichtung gelagert, durchsetzt das erste rohrartige Lagerelement und steht im Bereich ihres anderen Endes mit dem ersten rohrartigen Lagerelement in Gewindeeingriff.

Auf diese Weise kann durch Drehung der Betätigungsstange gleichzeitig deren axiale Verstellung erreicht werden.

Für die axiale Verschiebung des Exzenterringträgers auf dem zweiten rohrartigen Lagerelement ist ein sich axial erstreckender drehbar an dem zweiten Lagerelement gehaltener und mit dem Exzenterringträger in Gewindeeingriff stehender Verstellbolzen vorgesehen.

Für den Eingriff sind entsprechende sich radial erstreckende Ansätze vorgesehen.

Weiterhin ist es von Vorteil, wenn an dem umlaufenden ringartigen Bearbeitungsgerätträger ein sich radial erstreckender Arm in an sich bekannter Weise vorgesehen ist, in dem eine Gewindespindel drehbar gelagert ist, an deren radial innenliegendem Ende ein Verstellzahnrad angeordnet ist, in dessen Umlaufbahn mindestens ein in dem Gehäuse des Bearbeitungsgerätträgers gelagerter sich axial erstreckender Verstellstift angeordnet ist.

Schließlich ist es von Vorteil, wenn der Exzenterringträger an seinem von der Innenspanneinrichtung abgewandten Ende mit gleichmäßig verteilten sich radial erstreckenden Armen versehen ist, an denen das Gehäuse für den Bearbeitungsgerätträger nach Verschwenken der Bearbeitungseinrichtung relativ zur Innenspanneinrichtung und nach Verstellen der Exzenter radial und/oder in Umfangsrichtung festlegbar ist.

Die Erfindung soll nun anhand der beigefügten Figuren näher erläutert werden. Es zeigt:

Fig. 1 einen Teilschnitt durch die Innenspanneinrichtung,

Fig. 2 einen der Fig. 1 zugeordneten Teilschnitt durch die Bearbeitungseinrichtung und

Fig. 3 einen Teilschnitt längs der Linie III-III in Fig. 2.

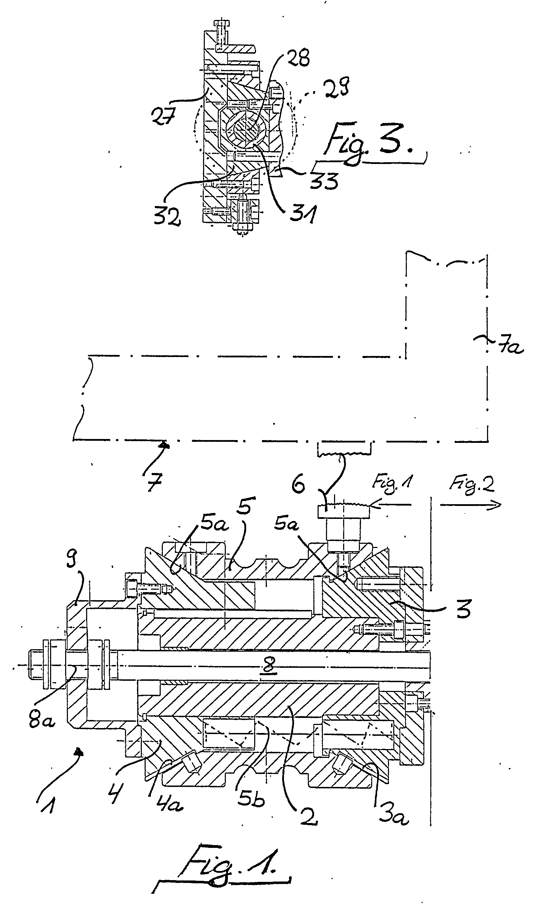

Die in der Fig. 1 dargestellte Innenspanneinrichtung 1 besteht aus einem Grundkörper 2, an dessen in der Fig. 1 rechten Ende ein Führungskörper 3 mit konischer Außenfläche 3a befestigt ist. An dem anderen Ende des Grundkörpers 2 ist ein entsprechender Führungskörper 4 mit konischer Führungsfläche 4a verschiebbar gelagert. Auf den Führungsflächen 3a und 4a sitzen Spreizelemente 5 mit entsprechenden Führungsflächen 5a. Die Führungskörper 3 und 4 werden durch Federn 5b auseinandergedrückt. Bei Bewegung des Führungskörpers 4 auf den Führungskörper 3 zu werden die Spreizelemente 5 und mit diesen verbundene Spannfüße 6 radial nach außen bewegt, bis die freien Flächen der Spannfüße 6 an der Innenfläche eines mit einem Flansch 7a versehenen Rohres 7 anliegen. Die Bewegung des Führungskörpers 4 auf den Führungskörper 3 zu wird mit Hilfe einer axial verschieblichen Betätigungsstange 8 erreicht, deren in der Fig. 1 linkes Ende 8a drehbar, aber axial unverschieblich in einer mit dem Führungskörper 4 verbundenen Kappe 9 gelagert ist.

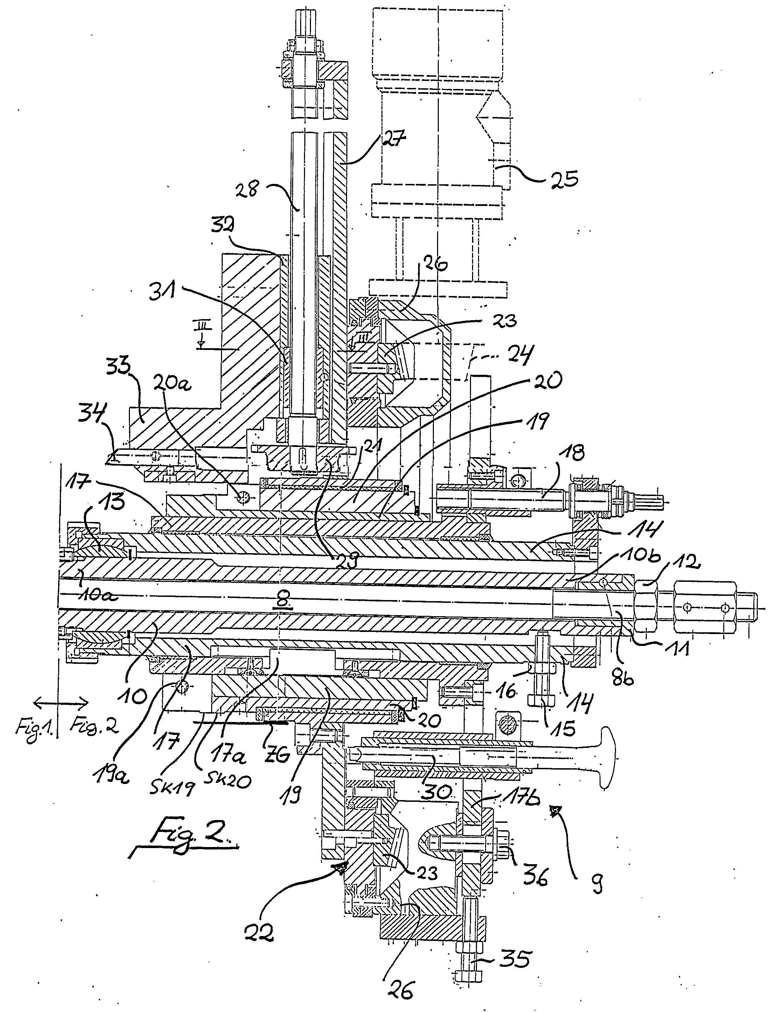

Die Betätigungsstange 8 erstreckt sich in die in der Fig. 2 dargestellte Bearbeitungseinrichtung 9 hinein und ist dort von einem ersten rohrartigen Lagerelement 10 umgeben, das, wie aus der Fig. 1 ersichtlich, mit dem Führungskörper 3 der Innenspanneinrichtung 1 verbunden ist. In dem in der Fig. 2 rechten Ende 10b des Lagerelements (10) ist eine Gewindebuchse 11 eingebracht, die mit einem entsprechenden Gewindeabschnitt auf dem anderen Ende 8b der Betätigungsstange in Eingriff steht. Durch Drehen der Betätigungsstange 8 wird infolge des Gewindeeingriffs die Stange entsprechend der Drehrichtung entweder nach links oder rechts in der Fig. 2 verschoben. Eine bestimmte axiale Verstellung kann durch eine Kontermutter (12) gesichert werden.

In der aus der Fig. 2 ersichtlichen Weise ist auf dem ersten rohrartigen Lagerelement (10) im Bereich seines mit der Innenspanneinrichtung 1 verbundenen Endes 10a ein teilkugelförmiges Lager 13 vorgesehen, mit dem ein zweites rohrartiges Lagerelement 14 in Schwenkeingriff steht. An dem anderen Ende 10b des zweiten rohrartigen Lagerelements sind sich radial erstreckende Einstellschrauben 15 in gleichmäßiger Umfangsverteilung vorgesehen, deren innenliegendes Ende sich auf der Außenfläche des ersten rohrartigen Lagerelements 10 abstützt. Durch Verstellen der Schrauben (15), vorzugsweise drei, in radialer Richtung, kann das erste rohrartige Lagerelement 10 und damit die gesamte Innenspanneinrichtung 1 relativ zum zweiten rohrartigen Lagerelement 14 verschwenkt werden. Eine erreichte Einstellung kann durch Kontermuttern 16 gesichert werden.

Auf dem zweiten rohrartigen Lagerelement 14 ist ein Exzenterringträger 17 in Gleiteingriff gelagert, so daß er axial relativ zum zweiten Lagerelement 14 mittels der sich axial erstreckenden Verstellschraube 18 (vgl. Fig. 2) verschiebbar ist.

Auf dem Exzenterringträger 17 ist ein innenliegender Exzenterring 19 und auf diesem ein außenliegender Exzenterring 20 angeordnet. Den Exzenterringen 19 und 20 sind jeweils Klemmungen 19a bzw. 20a zugeordnet. Die beiden Exzenterringe 19 und 20 sind gegeneinander und gemeinsam zum Exzenterringträger 17 verdrehbar und in erreichten Stellungen mittels der Klemmungen 19a bzw. 20a festlegbar.

Mittels eines Gleitlagers 21 ist auf dem äußeren Exzenterring 20 ein ringartiger Betätigungsgerätträger 22 in Form einer aus mehreren Bauteilen aufgebauten Baugruppe drehbar gelagert. Zu dem Bearbeitungsgerätträger 22 gehört ein Zahnkranz 23, der mit einem Ritzel 24 in Eingriff steht, das wiederum von einem nur skizzenhaft dargestellten elektrisch, pneumatischen oder hydraulischen Antrieb 25 gedreht wird. Weiterhin ist ein nicht mitumlaufendes und den Zahnkranz 23 schützendes Gehäuse 26 vorgesehen, das auch den Antrieb 25 trägt.

Zu der Baugruppe des Bearbeitungsgerätträgers 22 gehört auch ein sich radial erstreckender Arm 27, in dem eine Gewindespindel 28 drehbar

geiagert ist, an deren unterem Ende ein Verstellzahnrad 29 angeordnet ist. In der Umlaufbahn des Verstellzahnrades 29 ist in dem Gehäuse mindestens ein Verstellstift 30 verschiebbar angeordnet. Bei mehreren Verstellstiften können diese alle oder nur einer in die Umlaufbahn des Verstellzahnrades 29 axial vorgeschoben werden. Je nach Zahl der vorgeschobenen Stifte wird die Gewindespindel 28 langsamer oder schneller gedreht. Die Gewindespindel 28 steht in Eingriff mit einer Gewindemuffe 31, die in einem in dem Arm 27 geführten Schlitten 32 befestigt ist (zur Führung des Schlittens wird insbesondere auf die Fig. 3 verwiesen).

Mit dem Schlitten ist ein Bearbeitungsgerätthalter 33 verbunden, in dem bei dem in der Fig. 2 gezeigten Ausführungsbeispiel der Bearbeitungseinrichtung 9 ein Bearbeitungsstahl 34 gehalten ist.

Bei Betrieb der Vorrichtung wird die Innenspanneinrichtung 1 in das Rohr 7 eingeführt, und nach Lockerung der Kontermutter 12 wird die Betätigungsstange 8 so gedreht, daß die Füße 6 in fester Anlage an die Innenwandung des Rohres gelangen.

Danach wird durch Verstellen der Einstellschrauben 15 die gewünschte Fluchtung der Umlaufebene des Stahls 34 zu der Fläche des Flansches 7a eingestellt. Diese Einstellung wird durch die Kontermuttern 16 gesichert. Danach wird unter Zuhilfenahme eines auf dem Bearbeitungsgerätträger 22 vorgesehenen Zeigers ZG und zweier auf den Exzenterringen vorgesehenen Skalen SK19 und SK20 die exzentrische Relativlage des Bearbeitungsgerätträgers 22 bezüglich der Achse des Exzenterringträgers 17 duch getrennte und/oder gemeinsame Bewegung der Exzenterringe verstellt, bis die Achse des äußeren Exzenterrings 20 mit der Achse des Rohres 7 bzw. des Flansches 7a zusammenfällt.

Auf diese Weise wird sichergestellt, daß die Bearbeitungseinrichtung 9 auch bei hinsichtlich Winkel und/oder Exzentrizität nicht fluchtender Lage der Innenspanneinrichtung 1 auf die Achse des Rohres 7 bzw. des Flansches 7a ausgerichtet werden kann.

Es ist in bevorzugter Weise möglich, daß an dem Exzenterringträger 17 an seinem von der Innenspanneinrichtung angewandeten Ende mehrere sich radial erstreckende Arme 17a in gleichmäßiger Verteilung vorgesehen sind, an denen das Gehäuse 26 nach Verschwenken und/oder Verstellen der Exzenter radial durch Einstellschrauben 35 und/oder im Umfangsrichtung durch Schrauben 36 festlegbar ist (hierzu wird besonders auf die Fig. 2 verwiesen).

## Ansprüche

1. Innenspannende transportable Bearbeitungsvorrichtung mit einer in ein Rohr (7) oder dergleichen einschiebbaren Innenspanneinrichtung (1) einschließlich von durch Verschieben einer axialen Betätigungsstange (8) radial nach außen an die Innenwandung des Rohres anlegbaren Spannelementen (6) und einer axial zur Inneneinrichtung (1) versetzt angeordneten und mit dieser verbundenen und außerhalb des Rohres (7) angeordneten Bearbeitungseinrichtung (9) mit einem ringartigen und relativ zur Innenspanneinrichtung drehbaren und in einem drehfest gehaltenen Gehäuse (26) angeordneten Bearbeitungsgerätträger (22, 23), wobei das Bearbeitungsgerät (34) radial verstellbar an dem Träger (23) gelagert und in axialer Richtung verstellbar ist, dadurch gekennzeichnet, daß mit der Innenspanneinrichtung (1) ein sich durch den ringartigen Bearbeitungsgerätträger (22, 23) hindurch erstreckendes erstes rohrartiges Lager (10) verbunden ist, auf dessen der Innenspanneinrichtung (1) zugewandten Ende (10a) über eine zumindest teilkugelartig ausgebildete Lagerfläche (13) ein zum ersten rohrartigen Lagerelement (10) konzentrisches zweites rohrartiges Lagerelement (14) schwenkbar gelagert ist und an dessen anderen Ende (10b) das zweite Lagerelement (14) mittels mehrerer sich radial erstreckender Einstellschrauben (15) auf dem ersten rohrartigen Lagerelement (10) abgestützt ist, das auf dem zweiten Lagerelement (14) ein relativ zu diesem axial verschiebbarer rohrartiger Exzenterringträger (17) gelagert ist und daß auf dem Exzenterringträger (17) ein innerer (19) und ein äußerer Exzenterring (20) gelagert sind, die gegeneinander und gemeinsam relativ zum Exzenterringträger (17) verdrehbar und festklemmbar sind und daß der Bearbeitungsgerätträger (22) auf dem äußeren Exzenterring (20) drehbar gelagert ist.

2. Bearbeitungsvorrichtung nach Anspruch 1, dadurch gekennzeichnet, daß die Betätigungsstange (8) an ihrem innenliegenden Ende (8a) drehbar in der Innenspanneinrichtung (1) gelagert ist, das erste rohrartige Lagerelement (10) durchsetzt und im Bereich ihres anderen Ende (8b) mit dem ersten rohrartigen Lagerelement (10) in Gewindeeingriff (8b, 11) steht.

3. Bearbeitungsvorrichtung nach Anspruch 1 oder 2, dadurch gekennzeichnet, daß für die axiale Verschiebung des Exzenterringträgers (17) auf dem zweiten rohrartigen Lagerelement (14) ein sich axial erstreckender, drehbar an dem zweiten Lagerelement (14) gehaltener und mit dem Exzenterringträger (17) in Gewindeeingriff stehender Verstellbolzen (18) vorgesehen ist.

4. Bearbeitungsvorrichtung nach mindestens einem der Ansprüche 1 bis 3, **dadurch gekennzeichnet,** daß an dem umlaugenden ringartigen Bearbeitungsträger (23) ein sich radial erstreckender Arm (27) in an sich bekannter Weise vorgesehen ist, in dem eine Gewindespindel (28) drehbar gelagert ist, an deren radial innenliegendem Ende ein Verstellzahnrad (29) angeordnet ist, in dessen Umlaufbahn mindestens ein in dem Gehäuse (26) des Bearbeitungsgerätträgers (22) gelagerter sich axial erstreckender Verstellstift (30) angeordnet ist.

5. Bearbeitungsvorrichtung nach mindestens einem der Ansprüche 1 bis 4, **dadurch gekennzeichnet,** daß der Exzenterringträger (17) an seinem von der Innenspanneinrichtung (1) abgewandten Ende mit gleichmäßig verteilten sich radial erstreckenden Armen (17b) versehen ist, an denen das Gehäuse (26) für den Bearbeitungsgerätträger (22) nach Verschwenken der Bearbeitungseinrichtung (9) relativ zur Innenspanneinrichtung (1) und nach Verstellen der Exzenter (19, 20) radial und/oder in Umfangsrichtung festlegbar ist.

*Fig. 3.*

*Fig. 1*

*Fig. 2*

*Fig. 1.*

Fig. 2.